# EUROPEAN PATENT SPECIFICATION

(11) **EP 4 069 490 B1**
(45) Date of publication and mention of the grant of the patent: **06.11.2024**
(21) Application number: 20819689.9
(22) Date of filing: 02.12.2020
(51) Int. Cl.: B29C 45/27

(54) **A MOULD TOOL FOR INJECTION MOULDING**
FORMWERKZEUG ZUM SPRITZGIESSEN
OUTIL DE MOULAGE POUR MOULAGE PAR INJECTION

(30) Priority: 03.12.2019 DK PA201970745
(43) Date of publication of application: 12.10.2022
(73) Proprietor: LEGO A/S, 7190 Billund (DK)
(72) Inventor: LAMBÆK, Jens Stamp, 7190 Billund (DK)
(74) Representative: Guardian IP Consulting I/S
(86) International application number: PCT/EP2020/084224
(87) International publication number: WO 2021/110722

(56) References cited:
- JP-A- 2013 204 122
- US-A- 2 799 435
- US-A1- 2010 272 849
- US-A1- 2012 156 323
- "Mold Design-Runners", 23 March 2005 (2005-03-23), XP055101249, Retrieved from the Internet <URL:http://www.longmold.com/mold_design_runner.php> [retrieved on 20140210]

## Description

### Prior art:

The present invention relates to an injection-moulding tool configured for being mounted in an injection-moulding apparatus for automated moulding of work pieces in plastics, said injection-moulding tool comprising at least two separate mould parts forming a set of mould cavities, and where the separate mould parts comprises an inlet mould part having a mould inlet for injection of liquid plastics from the injection-moulding apparatus, and a second mould part, and where the mould parts has abutting side faces facing a common mould separation plane, and where the abutting side faces forms a set of runner channels extending between the mould inlet and the mould cavities, and where the runner channels comprises two flow channels being mutually joined at a junction at the downstream end of the two flow channels.

US patent application number 2004/0047943 discloses an injection moulding tool of the above mentioned type, where the spaced flow channels are arranged at intersecting angles to each other to create cross sectional flow and thereby an increased mixing of the material flowing in the intersecting flow channels.

US patent no. 2799435 shows another example of an injection moulding tool, where the runner channel is divided into two separate flow channels forming an annular flow channel surrounding a mold cavity so that the mold cavity can be filled via multiple injection gates.

### Object of the invention:

Based on this, it is the object of the present invention to provide an injection-moulding tool with cold runners allowing on the one hand that the cold runner channels or injection runner channels allows to quickly convey molten material to all mould cavities, but without unnecessary increase of the injection pressure or the temperature of the molten material, or without unnecessarily long cooling times for cooling the material in the injection runner before demoulding.

This is accomplished by the invention as set forth in claim 1, specifying that the two flow channels until the junction are straight and extending parallel to each other, and being completely or partly separated by a straight separating wall.

According to a preferred embodiment the moulding tool further comprises a closing mold part, and wherein the second mould part is arranged between the inlet mould part and the closing mould part, and where the closing mould part and the second mould part has second abutting side faces facing a second common mould separation plane, and where the second abutting side faces forms the mould cavities.

The two flow channels may have a cross section being circular, semi-circular, elliptical, semi-elliptical, polygonal, or any other cross section in a direction perpendicular to the flow direction in the flow channels allowing that the molten material to be conveyed efficiently through the flow channels.

Advantageously the two parallel flow channels, and optionally the separating wall, extends from the mould inlet and all the way to the runner branch.

Furthermore it is advantageous if the separating wall is configured such that the two flow channels are open to each other at the side of the flow channels being closest to each other. Thereby the demoulded distributor part is more stiff, and easier to demould.

### The drawing:

Figure 1: Is a principle drawing showing a perspective view of a distributor or runner channel in an injection mould.
Figure 2, 3 and 4: are sectional views showing different embodiments of the cross section of the main runner channel shown on figure 1.

### Description of an embodiment of the invention:

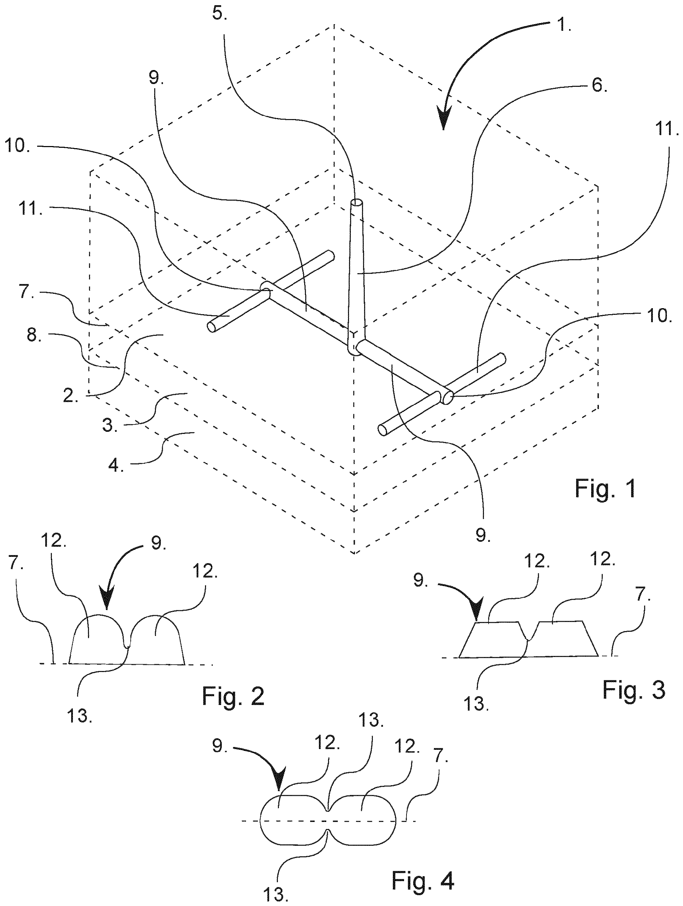

Figure 1 is a principle drawing showing the principle construction of a injection moulding tool 1 having 3 separate mould parts 2, 3, 4 comprising an inlet mould part 2, an intermediate/second mold part 3 and a closing mold part 4.

The inlet mould part 2 has a sprue channel 6 extending between a mould inlet 5 and a set of main runner channels 11 each extending from the sprue channel 6 and being connected downstream via runner branches 10 into a set of branched runner channels 11 that are again leading to multiple mould cavities (not shown) directly or via a number of further runner branches and branched runner channels (not shown).

In this embodiment the injection moulding tool 1 comprises three mould parts as mentioned above, and the inlet mould part 2 and the intermediate/second mould part 3 has abutting side faces forming a mould separation plane 7 where the runner channels (cold runners) are formed. The intermediate mould part 3 and the closing mould part 4 likewise have abutting side faces forming a second mould separation plane 8, where the mould cavities (not shown) forming the moulded product is arranged. It is however obvious to the skilled person that the present invention may also be used in conection with an injection moulding tool having only two separate mould parts, namely the inlet mould part 2, and the second mould part 3. In this last mentioned embodiment the mould cavities (not shown) are arranged in the same mould separation plane 7 as the runner channels 9, 11 (cold runners).

In order to ensure efficient distribution of molten plastic to the mould cavities, then the main runner channels 9 as shown in figure 1 has a cross section being larger than the cross section of the branched runner channels 11.

Figure 2, 3 and 4 now shows different embodiments of cross sections of the main runner channels perpendicular to the flow direction of the molten plastic in the main runner channels 9 shown in figure 1. Each embodiment has two straight flow channels 12 being separated by a straight separating wall 13, so that the molten plastic material flowing through the main runner channels 9 is divided into mainly two separate streams.

In the embodiments shown in figures 2, 3 and 4 the straight separating wall 13 does not completely separate the two flow channels 12, and thereby the runner formed by the main runner channels 9 is more stable so that demoulding of the runner from the main runner channels 9 is more reliable. It is however obvious to the skilled person that the staright separating walls may also extend all the way across the cross section of the main runner channels 9 so that the flow channels 12, and thereby the runner formed by the main runner channels 9 are completely separated.

## Claims

1. An injection-moulding tool (1) configured for being mounted in an injection-moulding apparatus for automated moulding of work pieces in plastics, said injection-moulding tool (1), in its closed position, comprises at least two separate mould parts forming a set of mould cavities, and where the separate mould parts comprises an inlet mould part (2) having a mould inlet (5) and a sprue channel (6) for injection of liquid plastics from the injection-moulding apparatus, and a second mould part (3), and where the mould parts (2, 3) has abutting side faces facing a common mould separation plane (7), and where the abutting side faces forms at least one main runner channel (9) extending between the sprue channel (6) and a runner branch (10) where it branches into two or more branched runner channels (11) leading to the mould cavities, and where at least the main runner channel (9) downstream from the sprue channel (6) comprises two flow channels (12) being mutually joined at a runner junction downstream from the sprue channel (6), **characterized in, that** in the two flow channels (12) until the runner junction are straight and extending parallel to each other, and being completely or partly separated by a straight separating wall (13).

2. An injection-moulding tool according to claim 1, and further comprising a closing mold part (4), and wherein the second mould part (3) is arranged between the inlet mould part (2) and the closing mould part (4), and where the closing mould part (4) and the second mould part (3) has second abutting side faces facing a second common mould separation plane (8), and where the second abutting side faces forms the mould cavities.

3. An injection-moulding tool according to claim 1 or 2, wherein both the two flow channels (12) have a cross section being at least partly circular, semi-circular, semi-elliptical, semi-elliptical, or polygonal in a direction perpendicular to the flow direction in the two flow channels.

4. An injection-moulding tool according to claim 3, wherein the two parallel flow channels (12) extends from the sprue channel (6), and the runner junction is formed by the runner branch (10).

5. An injection-moulding tool according to claim 3 or 4, wherein the separating wall (13) is configured such that the two flow channels (12) are open to each other at the side of the flow channels being closest to each other.

6. An injection-moulding tool according to one or more of the preceding claims, wherein the runner channels (11) form a cold runner

## Patentansprüche

1. Spritzformwerkzeug (1), das so konfiguriert ist, dass es in einer Spritzformeinrichtung zum automatisierten Formen von Werkstücken aus Kunststoff montiert werden kann, wobei das Spritzformwerkzeug (1) in seiner geschlossenen Position zumindest zwei separate Formteile umfasst, die einen Satz von Formhohlräumen bilden, und wobei die separaten Formteile ein Einlassformteil (2) mit einem Formeinlass (5) und einem Angusskanal (6) zum Einspritzen von flüssigem Kunststoff aus der Spritzgießvorrichtung und ein zweites Formteil (3) umfassen, und wobei die Formteile (2, 3) aneinanderstoßende Seitenflächen aufweisen, die einer gemeinsamen Formtrennebene (7) zugewandt sind, und wobei die aneinanderstoßenden Seitenflächen zumindest einen Hauptgießkanal (9) bilden, der sich zwischen dem Angusskanal (6) und einer Gießabzweigung (10) erstreckt, wo er sich in zwei oder mehr verzweigte Gießkanäle (11) verzweigt, die zu den Formhohlräumen führen, und wobei zumindest der Hauptgießkanal (9) stromabwärts des Angusskanals (6) zwei Strömungskanäle (12) umfasst, die an einer Gießerverbindung stromabwärts des Angusskanals (6) miteinander verbunden sind, **dadurch gekennzeichnet, dass** die beiden Strömungskanäle (12) bis zu der Gießerverbindung gerade sind und sich parallel zueinander erstrecken und vollständig oder teilweise durch eine gerade Trennwand (13) getrennt sind.

2. Spritzformwerkzeug nach Anspruch 1, und weiter umfassend ein Schließformteil (4), und wobei das zweite Formteil (3) zwischen dem Einlassformteil (2) und dem Schließformteil (4) angeordnet ist, und wobei das Schließformteil (4) und das zweite Formteil (3) zweite aneinanderstoßende Seitenflächen aufweisen, die einer zweiten gemeinsamen Formtrennebene (8) zugewandt sind, und wobei die zweiten aneinanderstoßenden Seitenflächen die Formhohlräume bilden.

3. Spritzformwerkzeug nach Anspruch 1 oder 2, wobei die beiden Strömungskanäle (12) einen Querschnitt aufweisen, der zumindest teilweise kreisförmig, halbkreisförmig, halbelliptisch, halbelliptisch oder polygonal in einer Richtung senkrecht zur Strömungsrichtung in den beiden Strömungskanälen ist.

4. Spritzformwerkzeug nach Anspruch 3, wobei sich die beiden parallelen Strömungskanäle (12) vom Angusskanal (6) aus erstrecken und die Gießerverbindung durch die Gießabzweigung (10) gebildet wird.

5. Spritzformwerkzeug nach Anspruch 3 oder 4, wobei die Trennwand (13) so konfiguriert ist, dass die beiden Strömungskanäle (12) an der Seite, an der die Strömungskanäle einander am nächsten sind, zueinander offen sind.

6. Spritzformwerkzeug nach einem oder mehreren der vorstehenden Ansprüche, wobei die Gießkanäle (11) einen Kaltkanal bilden.

## Revendications

1. Outil de moulage par injection (1) configuré pour être monté dans un appareil de moulage par injection pour le moulage automatisé de pièces en plastique, ledit outil de moulage par injection (1), dans sa position fermée, comprend au moins deux parties de moule distinctes formant un ensemble de cavités de moule, et où les parties de moule distinctes comprennent une partie de moule d'entrée (2) présentant une entrée de moule (5) et un canal de carotte (6) pour l'injection de plastiques liquides à partir de l'appareil de moulage par injection, et une seconde partie de moule (3), et où les parties de moule (2, 3) présentent des faces latérales en butée faisant face à un plan commun de séparation de moule (7), et où les faces latérales en butée forment au moins un canal de coulée principal (9) s'étendant entre le canal de carotte (6) et une ramification de coulée (10) où il se ramifie en deux canaux de coulée ramifiés (11) ou plus conduisant aux cavités de moule, et où au moins le canal de coulée principal (9) en aval du canal de carotte (6) comprend deux canaux d'écoulement (12) qui se réunissent mutuellement au niveau d'une jonction de coulée en aval du canal de carotte (6), **caractérisé en ce que** dans les deux canaux d'écoulement (12) jusqu'à la jonction de coulée sont droits et s'étendent parallèlement l'un à l'autre, et sont entièrement ou partiellement séparés par une paroi de séparation droite (13).

2. Outil de moulage par injection selon la revendication 1, et comprenant en outre une partie de moule de fermeture (4), et dans lequel la seconde partie de moule (3) est agencée entre la partie de moule d'entrée (2) et la partie de moule de fermeture (4), et où la partie de moule de fermeture (4) et la seconde partie de moule (3) présentent des secondes faces latérales en butée faisant face à un second plan de séparation de moule commun (8), et où les secondes faces latérales en butée forment les cavités de moule.

3. Outil de moulage par injection selon la revendication 1 ou 2, dans lequel les deux canaux d'écoulement (12) présentent une section transversale étant au moins en partie circulaire, semi-circulaire, semi-elliptique, semi-elliptique ou polygonale dans une direction perpendiculaire à la direction d'écoulement dans les deux canaux d'écoulement.

4. Outil de moulage par injection selon la revendication 3, dans lequel les deux canaux d'écoulement parallèles (12) s'étendent à partir du canal de carotte (6), et la jonction de coulée est formée par la ramification de coulée (10).

5. Outil de moulage par injection selon la revendication 3 ou 4, dans lequel la paroi de séparation (13) est configurée de telle sorte que les deux canaux d'écoulement (12) sont ouverts l'un vers l'autre du côté des canaux d'écoulement le plus proche l'un de l'autre.

6. Outil de moulage par injection selon une ou plusieurs des revendications précédentes, dans lequel les canaux de coulée (11) forment une coulée froide.
